# EUROPÄISCHE PATENTSCHRIFT

(11) **EP 3 042 929 B1**
(45) Veröffentlichungstag und Bekanntmachung des Hinweises auf die Patenterteilung: **11.10.2017**
(21) Anmeldenummer: 16150452.7
(22) Anmeldetag: 07.01.2016
(51) Int. Cl.: C08K 5/5419, C08L 23/20, C08L 83/04, C08K 5/00, C08K 5/15

(54) **GUMMIMISCHUNGSZUSAMMENSETZUNG**
RUBBER MIXTURE COMPOSITION
COMPOSITION DE MELANGE DE CAOUTCHOUC

(30) Priorität: 08.01.2015 AT 500102015
(43) Veröffentlichungstag der Anmeldung: 13.07.2016
(73) Patentinhaber: Karall, Gerhard, 2620 Neunkirchen (AT)
(72) Erfinder: Karall, Gerhard, 2620 Neunkirchen (AT)
(74) Vertreter: Babeluk, Michael

(56) Entgegenhaltungen:
- WO-A1-2014/134648

## Beschreibung

Die Erfindung bezieht sich auf Gummimischungszusammensetzung auf der Basis von trans-Polynorbornene und auf deren Verwendung.

Bekannte Gummimischungszusammensetzungen auf der Basis von trans-Polynorbornene sind lediglich bis zu Umgebungstemperaturen von rund 70 °C sinnvoll einsetzbar. Bei höheren Temperaturen altert das Material rapide und weist in der Folge die alterungssprezifischen Eigenschaften, wie Verhärtung, Reduktion der Dehnung und Festigkeit, sowie der reduzierten statischen und dynamischen zulässigen Belastbarkeit auf.

Die bisher bekannten Verbesserungstechnologien für Gummimischungszusammensetzungen auf der Basis von trans-Polynorbornene, sogenannte Norsorex Compounds, (Norsorex ist der Markenname der Firma Startech, AT) sind in der US 5 145 897 und der US 4 203 884 beschrieben.

Gemäß der US 4 203 884 wird ein kristallines Polyolefin mit Weichmacherzusatz vorgeschlagen. Nach der Lehre der US 5 145 897 wird eine Gummimischungszusammensetzungen auf der Basis von trans-Polynorbornene durch Zusatz von Radikalen in Verbindung mit Halogenen verbessert.

Der Erfindung liegt somit die Aufgabe zugrunde, den sinnvoll nutzbaren Temperaturbereich für Gummimischungszusammensetzungen auf der Basis von trans-Polynorbornene nach oben hin zu erweitern. Insbesondere soll der nutzbare Temperaturbereich einen Einsatz der Gummimischungszusammensetzung bis zu einer Gebrauchstemperatur von wenigstens 100 °C.

Die Erfindung löst die gestellte Aufgabe durch eine Gummimischungszusammensetzung, bestehend aus 100 Gewichtsteilen trans-Polynorbornene und 0,1 bis 200 Gewichtsteilen, vorzugsweise 30 Gewichtsteilen, Silikonkautschuk.

Mit der gegenständlichen Erfindung gelingt eine wesentliche messbare Verbesserung der thermischen Eigenschaften der Gummimischungszusammensetzung die damit bis zu einer Gebrauchstemperatur von 100 °C und darüber hinaus sinnvoll einsetzbar ist, ohne eine vorzeitige Alterung in Kauf nehmen zu müssen.

Dadurch ergibt sich ein erheblicher Vorteil hinsichtlich der Einsatzbarkeit, wie beispielsweise nunmehr auch auf dem automotiven Sektor, wo bis dato die eingeschränkte Temperaturstabilität die Vorteile von transPolynorbornene-Zusammensetzungen wettgemacht hat und ein breiterer Einsatz als Basiszusammensetzung für Antivibrationsbauelemente bzw. Dämmelemente nicht in Frage kam. Mit der erfindungsgemäßen Zusammensetzung ist nunmehr ein Einsatz der Gummimischungszusammensetzung bis zu einer Gebrauchstemperatur von wenigstens 100 °C, und insbesondere auch darüber hinaus, möglich Zur Anpassung der Gummimischungszusammensetzung an die vom Verwendungszweck abhängigen, gewünschten Materialeigenschaften können der Gummimischungszusammensetzung 1 bis 400 Gewichtsteile, vorzugsweise 150 Gewichtsteile, paraffinischer, naphtenischer und/oder aromatischer Prozessöle zugesetzt sein. Die angestrebten Materialeigenschaften werden durch Kombination von trans-Polynorbornene bei entsprechender Verbatchung mit Prozessölen (paraffinisch, naphtenisch oder aromatisch) erzielt.

Zudem kann sich die Gummimischungszusammensetzung durch den Zusatz von C9-Fraktionen (mit 80 bis 120 °Celsius Schmelzpunkt), Harzen und/oder Polymeren auszeichnen. Insbesondere empfiehlt sich der Zusatz von Naturkautschuk, NBR, Nitrilbutadienkautschuk, Butylkautschuk, PE, PP, EVA und/oder EPDM (NR, NBR, EPDM, SBR, BR, EVA, u. dgl.).
Die Gummimischungszusammensetzung ist bevorzugt mit Peroxiden vulkanisiert.

Eine erfindungsgemäße Gummimischungszusammensetzung besteht beispielsweise 100 Gewichtsteilen (kg, g, Gew%, ...) trans-Polynorbornene, 150 Gewichtsteilen RAE (refined aromatic extract) mit Silikonkautschuk auf Basis Dimethylsiloxan, Vinylmethylsiloxan und Phenylmethylsiloxan, vorzugsweise 27 Gewichtsteilen Dimethylsiloxan, 3 Gewichtsteilen Phenylmethylsiloxan und 0,2 Gewichtsteilen Vinylmethylsiloxan. Die Gummimischungszusammensetzung ist peroxidisch vernetzt, sowie der für Silikonartikel üblichen thermischen Nachbehandlung unterworfen worden.

Durch diese Gummimischungszusammensetzung kann einerseits die Alterung und die Temperaturbeständigkeit verbessert werden (Silikonkomponente) und können andererseits die einzigartigen Materialeigenschaften des transPolynorbornene, also die hohe Dämpfung (hoher Verlustfaktor tangens delta) in Kombination mit einer sehr guten Druckfestigkeit erhalten werden.

Diese Gummimischungszusammensetzung lässt sich auch bei tiefen Temperaturen anwenden, wobei hier anstatt des aromatischen Prozessöls beispielsweise ein paraffinisches Prozessöl zur Anwendung kommt.

## Patentansprüche

1. Gummimischungszusammensetzung, enthaltend 100 Gewichtsteile trans-Polynorbornene und 0,1 bis 200 Gewichtsteile, vorzugsweise 30 Gewichtsteile Silikonkautschuk.

2. Gummimischungszusammensetzung nach Anspruch 1, **gekennzeichnet durch** den Zusatz von 1 bis 400 Gewichtsteilen, vorzugsweise von 150 Gewichtsteilen, paraffinischen, naphthenischen und/oder aromatischen Prozessölen.

3. Gummimischungszusammensetzung, nach Anspruch 1 oder 2, **gekennzeichnet durch** den Zusatz von C9-Fraktionen, Harzen und/oder Polymeren.

4. Gummimischungszusammensetzung nach Anspruch 3, **gekennzeichnet durch** den Zusatz von Naturkautschuk, NBR, Nitrilbutadienkautschuk, Butylkautschuk, PE, PP, EVA und/oder EPDM.

5. Gummimischungszusammensetzung nach einem der Ansprüche 1 bis 4, **dadurch gekennzeichnet, dass** diese mit Peroxiden vulkanisiert ist.

6. Verwendung von Elastomerbauteilen gefertigt aus einer Gummimischungszusammensetzung nach einem der Ansprüche 1 bis 4 bei Umgebungstemperaturen von bis zu 100°C, insbesondere von bis zu 160°C.

7. Verwendung von Elastomerbauteilen gefertigt aus einer Gummimischungszusammensetzung nach Anspruch 6 bei Umgebungstemperaturen von 0 bis 160°C, insbesondere von 40 bis 100°C.

## Claims

1. A rubber mixture composition, containing 100 parts by weight of trans-polynorbornenes and 0.1 to 200 parts by weight, preferably 30 parts by weight, of silicone rubber.

2. A rubber mixture composition according to claim 1, **characterised by** the addition of 1 to 400 parts by weight, preferably 150 parts by weight, of paraffinic, naphthenic and / or aromatic process oils.

3. A rubber mixture composition according to claim 1 or 2, **characterised by** the addition of C9 fractions, resins and/or polymers.

4. A rubber mixture composition according to claim 3, **characterised by** the addition of natural rubber, NBR, nitrile butadiene rubber, butyl rubber, PE, PP, EVA and/or EPDM.

5. A rubber mixture composition according to one of the claims 1 to 4, **characterised in that** it is vulcanized with peroxides.

6. Use of elastomer components produced from a rubber mixture composition according to one of the claims 1 to 4 at ambient temperatures of up to 100°C, in particular of up to 160°C.

7. Use of elastomer components produced from a rubber mixture composition according to claim 6 at ambient temperatures of 0 to 160°C, in particular of 40 to 100°C.

## Revendications

1. Composition de mélange de caoutchouc renfermant 100 parties en poids de transpolynorbornène et 0,1 à 200 parties en poids de préférence 30 parties en poids de caoutchouc au silicone.

2. Composition de mélange de caoutchouc conforme à la revendication 1,
**caractérisée par**
l'addition de 1 à 400 parties en poids de préférence de 150 parties en poids d'huiles de process parafiniques naphténiques et/ou aromatiques.

3. Composition de mélange de caoutchouc conforme à la revendication 1 ou 2,
**caractérisée par**
l'addition de fractions C9, de résines et/ou de polymères.

4. Composition de mélange de caoutchouc conforme à la revendication 3,
**caractérisée par**
l'addition de caoutchouc naturel, de NBR, de nitrile-butadiène caoutchouc, de butyl caoutchouc, de PE, de PP, d'EVA et/ou d'EPDM.

5. Composition de mélange de caoutchouc conforme à l'une des revendications 1 à 4,
**caractérisée en ce qu'**
elle est vulcanisée avec des peroxydes.

6. Utilisation d'éléments élastomères obtenus à partir d'une composition de mélanges de caoutchouc conforme à l'une des revendications 1 à 4 à des températures d'environnement allant jusqu'à 100°C et en particulier jusqu'à 160°C.

7. Utilisation d'éléments élastomères obtenus à partir d'une composition de mélange de caoutchouc conforme à la revendication 6 à des températures d'environnement de 0 à 160°C, en particulier de 40 à 100°C.
